# EUROPEAN PATENT SPECIFICATION

(11) **EP 2 899 302 B1**
(45) Date of publication and mention of the grant of the patent: **15.11.2017**
(21) Application number: 13840060.1
(22) Date of filing: 17.09.2013
(51) Int. Cl.: D01F 6/48, D01F 1/07, D01F 6/54, D01F 6/08, D01F 6/18, C08K 3/22, C08K 5/02, C08F 20/44, C08F 214/08, C08F 214/18, C08K 3/24, C08K 3/36, C08K 3/30, D01F 6/32, C08K 3/34, C09J 4/06, D01F 6/38, C09J 123/08, C08L 23/08

(54) **HALOGEN-CONTAINING FLAME-RETARDANT FIBERS, METHOD FOR PRODUCING SAME, AND FLAME-RETARDANT FIBER PRODUCT USING SAME**
FLAMMHEMMENDE HALOGENHALTIGE FASERN, VERFAHREN ZUR HERSTELLUNG DAVON UND DIESE VERWENDENDES FLAMMHEMMENDES FASERPRODUKT
FIBRES IGNIFUGÉES CONTENANT DE L'HALOGÈNE, LEUR PROCÉDÉ DE PRODUCTION, ET PRODUIT EN FIBRES IGNIFUGÉES LES UTILISANT

(30) Priority: 21.09.2012 JP 2012208759
(43) Date of publication of application: 29.07.2015
(73) Proprietor: Kaneka Corporation, Osaka-shi, Osaka 530-8288 (JP)
(72) Inventor: TANAKA Takeshi, Hyogo 676-8688 (JP)
(74) Representative: Vossius & Partner Patentanwälte Rechtsanwälte mbB
(86) International application number: PCT/JP2013/075037
(87) International publication number: WO 2014/046087

(56) References cited:
- WO-A1-2006/008958
- JP-A- H11 310 688
- JP-A- 2000 212 900
- JP-A- 2003 082 238
- JP-A- 2005 082 668
- US-A- 4 268 432
- US-A1- 2006 214 143
- US-A1- 2010 029 156

## Description

### Technical Field

The present invention relates to a halogen-containing flame-retardant fiber, a method for producing the same, and a flame-retardant fiber product using the same. Specifically, the present invention relates to a halogen-containing flame-retardant fiber that contains a molybdenum compound having a specific average particle diameter, a method for producing the same, and a flame-retardant fiber product using the same.

### Background Art

Conventionally, in order to make halogen-containing fibers flame-retardant, addition of about 1 to 50 parts by weight of antimony compounds as a most effective flame retarder is a method that has been adopted generally. However, in recent years, as an environmental issue, the elution and discharge of such antimony compounds have gained attention, and they are suspected as substances causing symptoms of poisoning to human bodies when taken into human bodies in a large amount. Therefore, for eliminating the possibility of adversely affecting human bodies due to the elution and discharge of the antimony compounds, it becomes necessary to develop flame retarders in place of antimony compounds.

As fibers capable of obtaining flame retardance by addition of compounds other than the antimony compounds to halogen-containing fibers, Patent Document 1 proposes halogen-containing fibers to which zinc stannate compounds have been added. Other than the zinc stannate compounds, molybdenum compounds have been used as a flame retarder for halogen-containing polymers typified by polyvinyl chloride or a flame retarder for epoxy resin compositions (Patent Documents 2-6). Other than these, as a technique of enhancing flame-retardant properties, flame retarders are pulverized into nano-scale or submicron-scale, thereby enhancing flame-retardant efficiency and thus improving flame-retardant properties (Non-Patent Document 1).

### Prior Art Documents

### Patent Documents

Patent Document 1: JP 1998(H10)-1822 A
Patent Document 2: JP 4457182 B
Patent Document 3: JP 1997(H9)-263668 A
Patent Document 4: JP 2003-138102 A
Patent Document 5: JP 2011-42752 A
Patent Document 6: WO 2006/008958 A1

### Non-Patent Document

Non-Patent Document 1: "Lectures on flame retardance technology" (written by Hitoshi Nishizawa, published by Kogyo Chosakai Publishing Co., Ltd., issued in 2003, first edition, first printing, pages 80-93)

### Disclosure of Invention

### Problem to be Solved by the Invention

Regarding the proposal of Patent Document 1 described above, a large amount of zinc stannate compounds needs to be added to the halogen-containing fibers so as to obtain high flame retardance. This is practically unfavorable in terms of production, costs, and quality of fibers. In Patent Documents 2-6 described above, the molybdenum compounds are used together with other compounds having flame retardance. Generally, commercially-available molybdenum compounds as a smoke reduction agent or a flame retarder have an average particle diameter of 1 to 10 µm. When compared with the antimony compounds with the same addition amount, the molybdenum compounds have superior smoke suppression properties, but have inferior flame retardance. Therefore, when the molybdenum compounds are used as a flame retarder for halogen-containing polymers, they generally are used together with the antimony compounds or other flame retarders. Especially in a case of imparting high flame retardance to a thin structure such as a cloth that is obtained by spinning a halogen-containing polymer and mixing it with a flammable component such as cotton, it is difficult to achieve high flame retardance only by using such commercially-available molybdenum compounds having an average particle diameter of 1 to 10 µm. Further, regarding the proposal of Non-Patent Document 1 in which flame retarders are pulverized as a means for enhancing flame-retardant properties, this cannot always be applied to all the flame retarders or all the base polymers, and the effects vary depending on the flame retardance evaluation methods. Further, detailed data indicating that pulverization of the molybdenum compounds significantly improves flame-retardant properties has not yet been reported. Especially, in the application in which high flame retardance is achieved only by combination of the antimony compounds and halogen-based flame retarders, there are no cases where flame retardance is achieved practically only by pulverizing flame retarders other than the antimony compounds without addition of the antimony compounds.

In order to solve the above conventional problems, the present invention provides a halogen-containing flame-retardant fiber, a method for producing the same, and a flame-retardant fiber product using the same, in which a halogen-containing fiber can be highly flame-retarded without addition of antimony compounds that may adversely affect the environment and human bodies.

### Means for Solving Problem

A halogen-containing flame-retardant fiber of the present invention includes: 100 parts by mass of a halogen-containing polymer that contains 17 to 70 parts by mass of a halogen in 100 parts by mass of the polymer; and 1.3 to 20 parts by mass of a molybdenum compound. An average particle diameter of the molybdenum compound as expressed in median diameter is 10 nm or more and less than 600 nm, and wherein the halogen-containing polymer is a polymer obtained by polymerizing 100 parts by mass of a monomer composition in total that contains 30 to 70 parts by mass of acrylonitrile, 30 to 70 parts by mass of a halogen-containing vinylidene monomer and/or a halogen-containing vinyl monomer, and 0 to 10 parts by mass of a vinyl monomer copolymerizable therewith.

A method for producing the halogen-containing flame-retardant fiber of the present invention includes spinning a composition that contains 100 parts by mass of a halogen-containing polymer that contains 17 to 70 parts by mass of a halogen in 100 parts by mass of the polymer, and 1.3 to 20 parts by mass of a molybdenum compound. In the composition for the spinning, an average particle diameter of the molybdenum compound as expressed in median diameter is 10 nm or more and less than 600 nm, and wherein the halogen-containing polymer is a polymer obtained by polymerizing 100 parts by mass of a monomer composition in total that contains 30 to 70 parts by mass of acrylonitrile,30 to 70 parts by mass of a halogen-containing vinylidene monomer and/or a halogen-containing vinyl monomer, and 0 to 10 parts by mass of a vinyl monomer copolymerizable therewith.

A flame-retardant fiber product of the present invention includes the above halogen-containing flame-retardant fiber.

### Effect of the Invention

According to the present invention, it is possible to obtain a halogen-containing flame-retardant fiber and a flame-retardant fiber product having high flame retardance without addition of antimony compounds that may adversely affect the environment and human bodies.

### Description of the Invention

The present inventors have conducted numerous studies to solve the above problems and found out that, when 1.3 to 20 parts by mass of a molybdenum compound is blended into 100 parts by mass of a halogen-containing polymer that contains 17 to 70 parts by mass of a halogen in 100 parts by mass of the polymer, and an average particle diameter of the molybdenum compound as expressed in median diameter (hereinafter, also referred to as an average particle diameter simply) is set to be 10 nm or more and less than 600 nm, surpusingly, it is possible to obtain a halogen-containing flame-retardant fiber that has acquired high flame retardance without addition of antimony compounds. As a result, the present inventors have reached the present invention.

On the other hand, in the halogen-containing fibers containing the antimony compounds, there is no correlation between the degree of flame retardance and the size of the average particle diameter of the antimony compounds, and an effect of imparting high flame retardance to the fibers was not observed even when the average particle diameter was set to be less than 600 nm. Further, in the case of metal compounds that are commonly known as substances enhancing flame-retardant properties of halogen-containing polymers such as zinc hydroxystannate, metastannic acid, stannic oxide, iron oxide and bismuth oxide, the effect of imparting high flame retardance to the fibers was not observed even when the average particle diameter was set to be less than 600 nm. Especially in the case of blending zinc hydroxystannate into the halogen-containing polymers, the flame retardance increases as the average particle diameter of zinc hydroxystannate increases, which is a tendency opposite to that of the molybdenum compounds in which the flame retardance increases as the average particle diameter decreases.

In the present invention, by setting an average particle diameter of the molybdenum compound contained in the halogen-containing fiber as expressed in median diameter to be 10 nm or more and less than 600 nm, flame retardance is improved and high flame retardance is obtained, which is a peculiar effect obtained when the halogen-containing polymer and the molybdenum compound are used together.

The halogen-containing polymer used in the present invention contains 17 to 70 parts by mass of a halogen, preferably 23 to 70 parts by mass of a halogen in 100 parts by mass of the polymer. Examples of the halogen-containing polymer that contains 17 to 70 parts by mass of a halogen in 100 parts by mass of the polymer (hereinafter, also referred to as a halogen-containing polymer simply) include but are not limited to a polymer obtained by polymerizing a monomer containing a halogen, a copolymer of a monomer containing a halogen and a monomer not containing a halogen, a copolymer of a polymer containing a halogen and a monomer not containing a halogen, a polymer blend of a polymer containing a halogen and a polymer not containing a halogen.

Specific examples of the halogen-containing polymer include but are not limited to: a homopolymer of a halogen-containing monomer such as vinyl chloride, vinylidene chloride, vinyl bromide and vinylidene bromide: a copolymer of two or more kinds of halogen-containing monomers selected from the group consisting of vinyl chloride, vinylidene chloride, vinyl bromide, vinylidene bromide and the like; a copolymer of acrylonitrile and one or more kinds of halogen-containing monomers, such as acrylonitrile-vinyl chloride, acrylonitrile-vinylidene chloride, acrylonitrile-vinyl bromide, acrylonitrile-vinyl chloride-vinylidene chloride, acrylonitrile-vinyl chloride-vinyl bromide, and acrylonitrile-vinylidene chloride-vinyl bromide; and a copolymer of the copolymer of acrylonitrile and one or more kinds of halogen-containing monomers and a vinyl-based monomer copolymerizable therewith.

Examples of the vinyl-based monomer copolymerizable therewith include acrylic acid and an ester thereof, methacrylic acid and an ester thereof, acrylamide, methacrylamide, vinyl acetate, vinylsulfonic acid and a salt thereof, methacryl sulfonic acid and a salt thereof, and styrene sulfonic acid and a salt thereof. One kind or at least two kinds of them can be used.

Preferably, the halogen-containing polymer is, e.g., a polymer obtained by polymerizing 100 parts by mass of a monomer composition in total that contains 30 to 70 parts by mass of acrylonitrile, 30 to 70 parts by mass of a halogen-containing vinylidene monomer and/or a halogen-containing vinyl monomer, and 0 to 10 parts by mass of a vinyl monomer copolymerizable therewith. When the content of the acrylonitrile is 30 to 70 parts by mass, the heat resistance necessary for spinning can be obtained, and fibers can be flame-retarded. The lower limit of the content of the acrylonitrile is particularly preferably 40 parts by mass or more, and further preferably 45 parts by mass or more. The upper limit of the content of the acrylonitrile is particularly preferably 60 parts by mass or less, and further preferably 57 parts by mass or less. Within the above preferable ranges, the heat resistance necessary as fibers for clothes and the like can be obtained while maintaining flame retardance. The lower limit of the content of the halogen-containing vinylidene monomer and/or the halogen-containing vinyl monomer is particularly preferably 40 parts by mass or more, and further preferably 43 parts by mass or more, and the upper limit thereof is particularly preferably 60 parts by mass or less, and further preferably 50 parts by mass or less. The lower limit of the content of the vinyl monomer copolymerizable therewith is particularly preferably 0.3 parts by mass or more, and further preferably 0.5 parts by mass or more, and the upper limit thereof is particularly preferably 7 parts by mass or less, and further preferably 3 parts by mass or less. For further developing the flame retardance, it is particularly preferable to use the halogen-containing vinylidene monomer as the halogen-containing monomer. Further, in terms of imparting dyeability to the polymer, it is preferable to use at least one kind of a sulfonic acid group-containing vinyl monomer as the vinyl monomer copolymerizable therewith.

The halogen-containing polymer can be obtained by a known polymerization method. Examples of the polymerization system include but are not limited to bulk polymerization, suspension polymerization, emulsion polymerization, and solution polymerization, and examples of the polymerization form include but are not limited to a continuous type, a batch type, and a semibatch type. Among those, from an industrial standpoint, the emulsion polymerization and the solution polymerization are preferred as the polymerization system, and the continuous type and the semibatch type are preferred as the polymerization form.

The halogen-containing flame-retardant fiber of the present invention contains 1.3 to 20 parts by mass of a molybdenum compound based on 100 parts by mass of the halogen-containing polymer. When the content of the molybdenum compound in the halogen-containing flame-retardant fiber satisfies the above ranges, sufficient flame retardance is obtained, and problems such as clogging of a filter cloth or nozzle in a fiber production process are less likely to occur. Thereby, further sufficient fiber properties (strength and elongation) can be obtained. The content of the molybdenum compound is preferably 2.6 parts by mass or more, more preferably 4 parts by mass or more based on 100 parts by mass of the halogen-containing polymer. Further, the addition amount of the molybdenum compound is preferably 13 parts by mass or less, and more preferably 10 parts by mass or less based on 100 parts by mass of the halogen-containing polymer.

Examples of the molybdenum compound include molybdenum oxide, molybdenum sulfide, ammonium molybdate, zinc molybdate, calcium molybdate, molybdenum oxide supported on an inorganic filler, molybdenum sulfide supported on an inorganic filler, ammonium molybdate supported on an inorganic filler, zinc molybdate supported on an inorganic filler, and calcium molybdate supported on an inorganic filler. Examples of the inorganic filler include talc and calcium carbonate. These molybdenum compounds can be used alone or in combination of two or more.

In the halogen-containing flame-retardant fiber of the present invention, the molybdenum compound is required to have an average particle diameter as expressed in median diameter of less than 600 nm in terms of flame-retardant properties. In the halogen-containing flame-retardant fiber of the present invention, high flame retardance can be obtained by setting the average particle diameter of the molybdenum compound to be less than 600 nm. Of course, even when the average particle diameter is 600 nm or more, flame-retardant properties can be improved by increasing the addition amount of the molybdenum compound. However, increasing the addition amount causes troubles more easily in the fiber production step, which further increases costs. Therefore, in terms of actual use, the average particle diameter of the molybdenum compound is required to be less than 600 nm. The average particle diameter of the molybdenum compound is preferably 590 nm or less, more preferably 570 nm or less, further preferably 540 nm or less, further preferably 300 nm or less, further preferably less than 300 nm, further preferably 100 nm or less, and still further preferably less than 100 nm. By setting the average particle diameter of the molybdenum compound to be less than 300 nm, flame-retardant properties can be developed highly and luster can be imparted to fibers when it is added to a thin-formed body such as a fiber. Setting the average particle diameter of the molybdenum compound to be less than 100 nm is preferred to enhance those effects further. Although the lower limit of the average particle diameter of the molybdenum compound is not limited particularly, the average particle diameter of less than 10 nm is not preferred because particles of the molybdenum compound will be eluted easily into a coagulation bath or a water-washing bath when the fiber production method is a wet spinning method. Especially when the addition amount of the metal compound is the same, the halogen-containing flame-retardant fiber containing the molybdenum compound having an average particle diameter of less than 300 nm has flame retardance equivalent to that of the halogen-containing flame-retardant fiber containing an antimony compound.

As described later, in the present invention, the molybdenum compound is included in the halogen-containing flame-retardant fiber by spinning a composition containing the halogen-containing polymer and the molybdenum compound. The average particle diameter of the molybdenum compound in the composition (spinning composition) for the spinning and the average particle diameter of the molybdenum compound in the halogen-containing flame-retardant fiber are almost the same. Especially, in the case of wet spinning, the average particle diameter of the molybdenum compound in the spinning composition (spinning dope) as expressed in median diameter may be used as the average particle diameter of the molybdenum compound in the halogen-containing flame-retardant fiber. The average particle diameter of the molybdenum compound in the spinning composition as expressed in median diameter (d50) can be measured by, e.g., a laser diffraction scattering type measurement method. Incidentally, the average particle diameter of the molybdenum compound in the halogen-containing flame-retardant fiber of the present invention can be measured by observation using a scanning electron microscope (SEM). For example, in an arbitrary visual field of a cross-section photograph (x20000) perpendicular to a fiber axis and a cross-section photograph (x20000) parallel to the fiber axis taken by the scanning electron microscope, the particle diameters of 100 particles are measured using an image analysis software WinROOF (Ver. 5.04), and the measured values may be averaged to calculate the average particle diameter.

The halogen-containing flame-retardant fiber of the present invention can be produced by a known production method such as a wet spinning method, a dry spinning method, and a semi-dry and semi-wet spinning method, using a composition obtained by adding 1.3 to 20 parts by mass of the molybdenum compound having an average particle diameter as expressed in median diameter of 10 nm or more and less than 600 nm, with respect to 100 parts by mass of the halogen-containing polymer that contains 17 to 70 parts by mass of a halogen.

In the wet spinning method, for example, the halogen-containing flame-retardant fiber is obtained as follows. A molybdenum compound is added and mixed in a resin solution in which the halogen-containing polymer is dissolved in a solvent such as N,N-dimethylformamide, N,N-dimethylacetoamide, actone, a rhodan salt aqueous solution, dimethyl sulfoxide, and a nitric acid aqueous solution. A composition (spinning dope) thus obtained is extruded to a coagulation bath through a nozzle to be coagulated, followed by washing with water, drying, drawing, heat treatment, crimping if necessary, and cutting. The solvent used for dissolving the halogen-containing polymer is preferably one or more kinds of solvents selected from the group consisting of N,N-dimethylformamide, N,N-dimethylacetoamide, dimethyl sulfoxide and acetone, and further preferably one or more kinds of solvents selected from the group consisting of N,N-dimethylformamide, dimethyl sulfoxide and acetone in terms of industrial handleability.

In the wet spinning, the spinning composition (spinning dope) may be prepared by adding and mixing a sol of the molybdenum compound or a dispersion liquid of the molybdenum compound into a resin solution in which the halogen-containing polymer is dissolved. The sol of the molybdenum compound can be produced based on a general production method of sols of molybdenum compounds. For example, molybdic acid is added to hydrogen peroxide water that has been diluted with water in advance, stirred for 2 hours at 95°C to bring it into a state of permolybdic acid, followed by addition of 0.03 to 0.6 mol of L-ascorbic acid with respect to 1 mol of molybdenum oxide so as to reduce permolybdic acid, whereby a sol of molybdenum trioxide can be obtained. The dispersion liquid of the molybdenum compound can be produced based on a general production method of dispersion liquids of molybdenum compounds (particles). For example, molybdenum compound powder is dispersed in a solvent in which a dispersant is dissolved, and thereafter pulverized by a wet bead mill, whereby the dispersion liquid can be obtained. The average particle diameter of the molybdenum compound can be adjusted by the concentration of the molybdenum compound in the dispersion liquid, the concentration of the dispersant, conditions of the pulverization, etc. As the solvent used for producing the dispersion liquid of the molybdenum compound, e.g., solvents similar to those used for dissolving the halogen-containing polymer discussed above can be used. The dispersant is not limited particularly and, e.g., an acrylic acid-styrene-based dispersant can be used suitably in terms of high dispersion effects. Examples of the acrylic acid-styrene-based dispersant include styrene-acrylic acid-based resin such as a styrene-acrylic acid copolymer, a styrene-methacrylic acid-acrylic acid ester copolymer, a styrene-α-methyl styrene-acrylic acid copolymer, a styrene-α-methyl styrene-acrylic acid-acrylic acid ester copolymer, a styrene-acrylic acid ester-maleic acid copolymer, and a styrene-acrylic acid ester-styrenesulfonic acid copolymer. Further, as the dispersant, salts of sodium, potassium, ammonium and amines of the copolymers may be used. In the styrene-acrylic acid-based resin, an acrylic acid ester is preferably an acrylic acid alkyl ester having an alkyl group with a carbon number of 1 to 4. The dispersant may be used alone or in combination of two or more kinds.

In the case of using the sol of the molybdenum compound or the dispersion liquid of the molybdenum compound, the average particle diameter of the molybdenum compound in the spinning composition may be determined by measuring the median diameters (d50) of particles by a laser diffraction scattering type particle size distribution analyzer, using a sample obtained by diluting the sol of the molybdenum compound or the dispersion liquid of the molybdenum compound with the solvent used for dissolving the halogen-containing polymer.

The halogen-containing flame-retardant fiber of the present invention exhibits excellent flame-retardant properties also in an evaluation fabric produced by mixing the halogen-containing flame-retardant fiber with cotton in a mass ratio of 50:50. In a burning test method based on ISO 15025:2000 (Procedure A), the evaluation fabric does not melt and has an average afterflame time of less than 30 seconds.

The halogen-containing flame-retardant fiber of the present invention may be a short fiber or a long fiber, which can be selected appropriately depending upon the use method. When combined and processed with another fiber such as a natural fiber, a regenerated fiber, a semisynthetic fiber, or a synthetic fiber other than the halogen-containing flame-retardant fiber, preferably, the halogen-containing flame-retardant fiber is similar to the fiber to be combined. For example, the fineness of the halogen-containing flame-retardant fiber can be selected appropriately depending upon the application of a fiber product. When combined with another fiber selected appropriately from the group consisting of a natural fiber, a regenerated fiber, a semisynthetic fiber, and a synthetic fiber other than the halogen-containing flame-retardant fiber, the halogen-containing flame-retardant fiber may have the same fineness as that of another fiber, or may be thinner or thicker than another fiber. Specifically, the fineness is preferably 1 to 30 dtex, more preferably 1 to 10 dtex, and further preferably 1 to 3 dtex. Further, the cut length is selected appropriately depending upon the application of a fiber product. Examples include a short cut fiber (fiber length: 0.1 to 5 mm), a short fiber (fiber length: 38 to 128 mm), or a long fiber (filament) without being cut. Among those, the short fiber with a fiber length of about 38 to 76 mm is preferred.

The halogen-containing flame-retardant fiber of the present invention can of course be used alone, and also can be combined with another fiber such as a natural fiber, a regenerated fiber, a semisynthetic fiber, and a synthetic fiber other than the halogen-containing flame-retardant fiber. When combined with another fiber, preferably 10% by mass or more of the halogen-containing flame-retardant fiber of the present invention may be present based on the total amount of the fibers. The lower limit of the content of the halogen-containing flame-retardant fiber is preferably 30% by mass or more, and the upper limit thereof is preferably 70% by mass or less. Examples of the method for combining these include fiber blending, mixed spinning, and filament blending. Examples of the specific form of the combination include nonwoven fabric, woven fabric, knit fabric, lacework, and braiding.

Examples of the woven fabric include plain weave, twill weave, sateen weave, variegated plain weave, variegated twill weave, variegated sateen weave, fancy weave, brocade, single texture, double texture, multiple texture, warp pile weave, weft pile weave, and interweave. The plain weave, the sateen weave, and the brocade weave are excellent in texture and strength as goods.

Examples of the knit fabric include circular knitted fabric, weft knitted fabric, warp knitted fabric, pile fabric, plain stitch, plain knit, rib-knit, smooth knit (double knit), rib stitch, purl stitch, Denbigh stitch, cord texture, atlas texture, chain texture, and insertion texture. The plain nit and the rib-knit are excellent in texture as goods.

In the present invention, preferably, the flame-retardant fiber product contains 10% by mass or more of the halogen-containing flame-retardant fiber, and 90% by mass or less of at least one kind of fiber selected from the group consisting of a natural fiber, a regenerated fiber, a semisynthetic fiber, and a synthetic fiber other than the halogen-containing flame-retardant fiber. The lower limit of the content of the at least one kind of other fiber selected from the group consisting of a natural fiber, a regenerated fiber, a semisynthetic fiber, and a synthetic fiber other than the halogen-containing flame-retardant fiber is preferably 30% by mass or more, and the upper limit thereof is preferably 70% by mass or less.

Examples of the natural fiber include a cotton fiber, a kapok fiber, a linen fiber, a hemp fiber, a ramie fiber, a jute fiber, a Manila fiber, a kenaf fiber, a wool fiber, a mohair fiber, a cashmere fiber, a camel fiber, an alpaca fiber, an Angola fiber, and a silk fiber.

Examples of the regenerated fiber include a regenerated cellulose fiber, a regenerated collagen fiber, and a regenerated protein fiber. Examples of the regenerated cellulose fiber include rayon, polynosic, "Cupra" (trade name) manufactured by Asahi Chemical Industry Co., Ltd., "Tincel' (trade name) manufactured by LenzingAG, and "Lenzing Modal" (trade name) manufactured by LenzingAG.

Examples of the synthetic fiber other than the halogen-containing flame-retardant fiber include a polyester fiber, a polyamide fiber, a polylactic fiber, an acrylic fiber, a polyolefin fiber, a polyvinyl alcohol fiber, a polyvinyl chloride fiber, a polyvinylidene chloride fiber ("Saran" (trade name) manufactured by Asahi Chemical Industry Co., Ltd.), a polychlal fiber, a polyethylene fiber ("Dyneema" (trade name) manufactured by Tbyobo Co., Ltd.), a polyurethane fiber, a polyoxymethylene fiber, a polytetrafluoroethylene fiber, an aramid fiber ("Kevlar" (trade name) manufactured by DuPont, "Nomex" (trade name) manufactured by DuPont, "Technora" (trade name) manufactured by Teijin Ltd., "Twaron' (trade name) manufactured by Teijin Ltd., "Conex" (trade name) manufactured by Teijin Ltd.), a benzoate fiber, a polyphenylene sulfide fiber ("Procon" (trade name) manufactured by Toyobo Co., Ltd.), a polyether ether ketone fiber, a polybenzazole fiber, a polyimide fiber ("P84" (trade name) manufactured by Toyobo Co., Ltd.), and a polyamideimide fiber ("Kolmel" (trade name) manufactured by Kolmel).

Further, examples of the regenerated fiber include a special regenerated cellulose fiber (rayon fiber containing water glass: "Visil (trade name) manufactured by Sateri Co., "FR Corona" (trade name) manufactured by Daiwabo Co., Ltd.), a post-processed flame-retardant cellulose fiber coated with a flame retarder, and an untreated flame-retardant rayon fiber ("Lenzing FR" (trade name) manufactured by Lenzing AG). Further, examples of the synthetic fiber other than the halogen-containing flame-retardant fiber include flame-retardant polyester ("Heim" (trade name) manufactured by Toyobo Co., Ltd., "Trevira CS" (trade name) manufactured by Trevira GmbH), a polyethylene naphthalate fiber ("Teonex" (trade name) manufactured by Teijin Ltd.), a melamine fiber ("Basofil" (trade name) manufactured by Basofil Fiber LLC), an acrylate fiber ("Moiscare" (trade name) manufactured by Toyobo Co., Ltd.), and a polybenzoxide fiber ("Zylon" (trade name) manufactured by Toyobo Co., Ltd.). The other examples include an acryl oxide fiber, a carbon fiber, a glass fiber, and an activated carbon fiber.

The flame-retardant fiber product of the present invention can contain a cellulosic fiber as another fiber appropriately. The cellulosic fiber used in the present invention is not limited particularly, and may be a cellulosic fiber that belongs to a natural cellulosic fiber, a regenerated cellulosic fiber, or a semisynthetic cellulosic fiber, for example. Among these, the cellulosic fiber is preferably at least one kind of cellulosic fiber selected from the group consisting of a cotton fiber, a linen fiber, a rayon fiber, a polynosic fiber, a cupra fiber, and a cellulose acetate fiber, and particularly preferably at least one kind of cellulosic fiber selected from the group consisting of a cotton fiber and a rayon fiber in terms of hygroscopicity and comfort. The flame-retardant fiber product preferably contains 30 to 70% by mass of the cellulosic fiber, and more preferably contains 40% by mass of the cellulosic fiber.

The halogen-containing flame-retardant fiber of the present invention may contain other additives such as an antistatic agent, a thermal coloration inhibitor, a light resistance improving agent, a whiteness improving agent, a devitrification inhibitor, a coloring agent, and a flame retarder, if required.

Examples of the flame-retardant fiber product of the present invention include the following.

### (1) Clothes and daily commodities

Clothes (including a jacket, underwear, a sweater, a vest, trousers, etc.), gloves, socks, a muffler, a cap, bedclothes, a pillow, a cushion, a stuffed toy, etc.

### (2) Special clothes

Protective clothing, a fireman uniform, working clothes, winter clothes, etc.

### (3) Interior materials

Upholstery, a curtain, wallpaper, a carpet, etc.

### Examples

Hereinafter, the present invention will be described in examples; however, the present invention is not limited to these examples. In the following examples, "%" refers to "% by mass". The flame retardance of fibers in the examples was evaluated by flame retardance tests (burning tests) using fabrics.

### (Example 1)

### <Production Example 1 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in dimethyl sulfoxide so that a resin concentration would be 28%, whereby a resin solution was obtained. A sol of molybdenum trioxide having an average particle diameter of 12 nm was added to the obtained resin solution so that the addition amount of the molybdenum trioxide would be 4% by mass with respect to the total mass of the resin in the resin solution, whereby a spinning dope was prepared. Here, the sol of molybdenum trioxide having an average particle diameter of 12 nm was obtained by adding molybdic acid (manufactured by Wako Pure Chemical Industries, Ltd.) to hydrogen peroxide water (manufactured by Wako Pure Chemical Industries, Ltd., product with 30% concentration) that had been diluted with water in advance, stirring it for 2 hours at 95°C to bring it into a state of permolybdic acid, and thereafter adding 0.03 to 0.6 mol of L-ascorbic acid (manufactured by Wako Pure Chemical Industries, Ltd.) with respect to 1 mol of molybdenum oxide so as to reduce permolybdic acid. The spinning dope was extruded to a 60% dimethyl sulfoxide aqueous solution through a nozzle with 2000 holes, each having a diameter of 0.08 mm, washed with water while being drawn so as to obtain a rinsed yarn. The rinsed yarn obtained was dried at 120°C, further drawn to 2 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Example 2)

### <Production Example 2 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of molybdenum trioxide having an average particle diameter of 100 nm was added to the obtained resin solution so that the addition amount of the molybdenum trioxide would be 4% by mass with respect to the total mass of the resin in the resin solution, whereby a spinning dope was prepared. Here, the dispersion liquid of molybdenum trioxide having an average particle diameter of 100 nm was obtained by dispersing molybdenum trioxide powder (manufactured by Nippon Inorganic Colour & Chemical Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Example 3)

### <Production Example 3 of halogen-containing fiber>

A halogen-containing fiber was obtained in the same manner as in Production Example 2 except that a spinning dope was prepared by adding a dispersion liquid of molybdenum trioxide having an average particle diameter of 140 nm to the obtained resin solution so that the addition amount of the molybdenum trioxide would be 4% by mass with respect to the total mass of the resin in the resin solution. Here, the dispersion liquid of molybdenum trioxide having an average particle diameter of 140 nm was obtained by dispersing molybdenum trioxide powder (manufactured by Nippon Inorganic Colour & Chemical Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. A finishing oil for spinning (manufactured by Takemoto Oil & Fat Co., Ltd.) was applied to the obtained halogen-containing fiber. The fiber thus obtained was crimped and cut into a length of 38 mm.

### (Example 4)

### <Production Example 4 of halogen-containing fiber>

A halogen-containing fiber was obtained in the same manner as in Production Example 2 except that a spinning dope was prepared by adding a dispersion liquid of molybdenum trioxide having an average particle diameter of 540 nm to the obtained resin solution so that the addition amount of the molybdenum trioxide would be 4% by mass with respect to the total mass of the resin in the resin solution. Here, the dispersion liquid of molybdenum trioxide having an average particle diameter of 540 nm was obtained by dispersing molybdenum trioxide powder (manufactured by Nippon Inorganic Colour & Chemical Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. A finishing oil for spinning (manufactured by Takemoto Oil & Fat Co., Ltd.) was applied to the obtained halogen-containing fiber. The fiber thus obtained was crimped and cut into a length of 38 mm.

### (Example 5)

### <Production Example 5 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of ammonium molybdate having an average particle diameter of 160 nm was added to the obtained resin solution so that the addition amount of the ammonium molybdate would be 4% by mass with respect to the total mass of the resin in the resin solution, whereby a spinning dope was prepared. Here, the dispersion liquid of ammonium molybdate having an average particle diameter of 160 nm was obtained by dispersing ammonium molybdate powder (manufactured by Nippon Inorganic Colour & Chemical Co., Ltd., grade: TF-2000) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Example 6)

### <Production Example 6 of halogen-containing fiber>

A halogen-containing fiber was obtained in the same manner as in Production Example 3 except that a spinning dope was prepared by adding a dispersion liquid of molybdenum trioxide having an average particle diameter of 140 nm to the resin solution so that the addition amount of the molybdenum trioxide would be 10% by mass with respect to the total mass of the resin in the resin solution. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 1)

### <Production Example 7 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of molybdenum trioxide having an average particle diameter of 1350 nm was added to the obtained resin solution so that the addition amount of the molybdenum trioxide would be 4% by mass with respect to the total mass of the resin in the resin solution, whereby a spinning dope was prepared. Here, the dispersion liquid of molybdenum trioxide having an average particle diameter of 1350 nm was obtained by dispersing molybdenum trioxide powder (manufactured by Nippon Inorganic Colour & Chemical Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 2)

### <Production Example 8 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of ammonium molybdate having an average particle diameter of 3450 nm was added to the obtained resin solution so that the addition amount of the ammonium molybdate would be 4% by mass with respect to the total mass of the resin in the resin solution, whereby a spinning dope was prepared. Here, the dispersion liquid of ammonium molybdate having an average particle diameter of 3450 nm was obtained by dispersing ammonium molybdate powder (manufactured by Nippon Inorganic Colour & Chemical Co., Ltd., grade: TF-2000) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 3)

### <Production Example 9 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of zinc hydroxystannate having an average particle diameter of 150 nm was added to the obtained resin solution so that the addition amount of the zinc hydroxystannate would be 4% by mass with respect to the total mass of the resin in the resin solution, whereby a spinning dope was prepared. Here, the dispersion liquid of zinc hydroxystannate having an average particle diameter of 150 nm was obtained by dispersing zinc hydroxystannate powder (manufactured by Mizusawa Industrial Chemicals, Ltd., grade: ALCANEX-ZHSF) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 4)

### <Production Example 10 of halogen-containing fiber>

A halogen-containing fiber was obtained in the same manner as in Production Example 9 except that a spinning dope was prepared by adding a dispersion liquid of zinc hydroxystannate having an average particle diameter of 250 nm to the obtained resin solution so that the addition amount of the zinc hydroxystannate would be 4% by mass with respect to the total mass of the resin in the resin solution. Here, the dispersion liquid of zinc hydroxystannate having an average particle diameter of 250 nm was obtained by dispersing zinc hydroxystannate powder (manufactured by Mizusawa Industrial Chemicals, Ltd., grade: ALCANEX-ZHSF) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 5)

### <Production Example 11 of halogen-containing fiber>

A halogen-containing fiber was obtained in the same manner as in Production Example 9 except that a spinning dope was prepared by adding a dispersion liquid of zinc hydroxystannate having an average particle diameter of 1440 nm to the obtained resin solution so that the addition amount of the zinc hydroxystannate would be 4% by mass with respect to the total mass of the resin in the resin solution. Here, the dispersion liquid of zinc hydroxystannate having an average particle diameter of 1440 nm was obtained by dispersing zinc hydroxystannate powder (manufactured by Mizusawa Industrial Chemicals, Ltd., grade: ALCANEX-ZHSF) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 6)

### <Production Example 12 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of metastannic acid having an average particle diameter of 240 nm was added to the obtained resin solution so that the addition amount of the metastannic acid would be 4% by mass with respect to the total mass of the resin in the resin solution, whereby a spinning dope was prepared. Here, the dispersion liquid of metastannic acid having an average particle diameter of 240 nm was obtained by dispersing metastannic acid powder (manufactured by Nihon Kagaku Sangyo Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 7)

### <Production Example 13 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in dimethyl sulfoxide so that a resin concentration would be 28%, whereby a resin solution was obtained. A sol of stannic oxide having an average particle diameter of 6 nm (manufactured by Taki Chemical Co., Ltd., grade: Ceramace S-8) was added to the obtained resin solution so that the addition amount of the stannic oxide would be 4% by mass with respect to the total mass of the resin in the resin solution, whereby a spinning dope was prepared. The spinning dope was extruded to a 60% dimethyl sulfoxide aqueous solution through a nozzle with 2000 holes, each having a diameter of 0.08 mm, washed with water while being drawn so as to obtain a rinsed yarn. The rinsed yarn obtained was dried at 120°C, further drawn to 2 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 8)

### <Production Example 14 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of stannic oxide having an average particle diameter of 150 nm was added to the obtained resin solution so that the addition amount of the stannic oxide would be 4% by mass with respect to the total mass of the resin in the resin solution, whereby a spinning dope was prepared. Here, the dispersion liquid of stannic oxide having an average particle diameter of 150 nm was obtained by dispersing stannic oxide powder (manufactured by Kojundo Chemical Lab. Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 9)

### <Production Example 15 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in dimethyl sulfoxide so that a resin concentration would be 28%, whereby a resin solution was obtained. A sol of iron oxide having an average particle diameter of 6 nm (manufactured by Taki Chemical Co., Ltd., grade: Bairaru Fe-C10) was added to the obtained resin solution so that the addition amount of the iron oxide would be 4% by mass with respect to the total mass of the resin in the resin solution, whereby a spinning dope was prepared. The spinning dope was extruded to a 60% dimethyl sulfoxide aqueous solution through a nozzle with 2000 holes, each having a diameter of 0.08 mm, washed with water while being drawn so as to obtain a rinsed yarn. The rinsed yarn obtained was dried at 120°C, further drawn to 2 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 10)

### <Production Example 16 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of iron oxide having an average particle diameter of 310 nm was added to the obtained resin solution so that the addition amount of the iron oxide would be 4% by mass with respect to the total mass of the resin in the resin solution, whereby a spinning dope was prepared. Here, the dispersion liquid of iron oxide having an average particle diameter of 310 nm was obtained by dispersing iron oxide powder (manufactured by Kojundo Chemical Lab. Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter pulverizing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Comparative Example 11)

### <Production Example 17 of halogen-containing fiber>

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of bismuth oxide having an average particle diameter of 150 nm was added to the obtained resin solution so that the addition amount of the bismuth oxide would be 4% by mass with respect to the total mass of the resin in the resin solution, whereby a spinning dope was prepared. Here, the dispersion liquid of bismuth oxide having an average particle diameter of 150 nm was obtained by dispersing bismuth oxide powder (manufactured by C. I. Kasei Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter dispersing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### <Reference Example 1>

### (Production Example 18 of halogen-containing fiber)

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A dispersion liquid of antimony trioxide having an average particle diameter of 800 nm was added to the obtained resin solution so that the addition amount of the antimony trioxide would be 2% by mass with respect to the total mass of the resin in the resin solution, whereby a spinning dope was prepared. Here, the dispersion liquid of antimony trioxide having an average particle diameter of 800 nm was obtained by dispersing antimony trioxide powder (manufactured by Nihon Seiko Co., Ltd.) into acetone in which an acrylic acid-styrene-based dispersant (styrene-acrylic acid copolymer, manufactured by BASF Japan, trade name "Joncryl (registered trademark) 611") was dissolved, and thereafter dispersing it using a wet bead mill. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 3 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

### (Reference Example 2)

### <Production Example 19 of halogen-containing fiber>

A halogen-containing fiber was produced in the same manner as in Production Example 18 except that a spinning dope was prepared by adding a dispersion liquid of antimony trioxide having an average particle diameter of 800 nm to the obtained resin solution so that the addition amount of the antimony trioxide would be 4% by mass with respect to the total mass of the resin in the resin solution. A finishing oil for spinning (manufactured by Takemoto Oil & Fat Co., Ltd.) was applied to the obtained halogen-containing fiber. The fiber thus obtained was crimped and cut into a length of 38 mm.

### (Reference Example 3)

### (Production Example 20 of halogen-containing fiber)

A copolymer that was obtained by polymerizing a monomer composition composed of 51 parts by mass of acrylonitrile, 48 parts by mass of vinylidene chloride and 1 part by mass of p-sodium styrenesulfonate was dissolved in acetone so that a resin concentration would be 28%, whereby a resin solution was obtained. A sol of antimony pentoxide having an average particle diameter of 80 nm (manufactured by Nyacol Nano Technologies Inc.) was added to the obtained resin solution so that the addition amount of the antimony pentoxide would be 4% by mass with respect to the total mass of the resin in the resin solution, whereby a spinning dope was prepared. The spinning dope was extruded to a 38% acetone aqueous solution through a nozzle with 2000 holes, each having a diameter of 0.08 mm, washed with water while being drawn so as to obtain a rinsed yarn. The rinsed yarn obtained was dried at 120°C, further drawn to 2 times at 150°C, and heat-treated in supersaturated steam for 30 seconds at 180°C, whereby a halogen-containing fiber having a fineness of 2 dtex was obtained. A finishing oil for spinning (manufactured by Takemoto Oil & Fat Co., Ltd.) was applied to the obtained halogen-containing fiber. The fiber thus obtained was crimped and cut into a length of 38 mm.

The average particle diameters of the metal compounds in the sols or dispersion liquids of the various metal compounds used in Production Examples 1-20 of halogen-containing fibers were measured as below.

### (Measurement method of average particle diameter)

In order to measure the particle diameters of the metal compounds in the sols of the various metal compounds used in Production Examples 1, 13, 15 and 20, samples were prepared by diluting the sols of the respective metal compounds with the solvents used for dissolving the halogen-containing polymers in the respective production examples. A laser diffraction scattering type particle size distribution analyzer (LA-950) (manufactured by HORIBA) was used to measure the median diameters of the metal compounds in the respective samples, thereby determining the average particle diameters of the various metal compounds. It can be considered that the measured average particle diameters of the metal compounds in the sols of the various metal compounds are the same as those of the metal compounds in the spinning dopes and those of the metal compounds in the halogen-containing fibers.

In order to measure the particle diameters of the metal compounds in the dispersion liquids of the various metal compounds that were pulverized/dispersed in acetone using a wet bead mill in production examples 2-12, 14 and 16-19, samples were prepared by diluting the dispersion liquids of the respective metal compounds with acetone (solvent used for dissolving the halogen-containing polymers in the respective production examples). A laser diffraction scattering type particle size distribution analyzer (LA-920) (manufactured by HORIBA) was used to measure the median diameters of the metal compounds in the respective samples, thereby determining the average particle diameters of the various metal compounds. It can be considered that the measured average particle diameters of the metal compounds in the dispersion liquids of the various metal compounds are the same as those of the metal compounds in the spinning dopes and those of the metal compounds in the halogen-containing fibers.

The flame retardance of the halogen-containing fibers obtained in Examples 1-6, Comparative Examples 1-11 and Reference Examples 1-3 were evaluated by a burning test method based on ISO 15025: 2000 (Procedure A), using fabrics containing the respective halogen-containing fibers.

### <Method of producing fabrics for flame retardance evaluation>

The halogen-containing fibers produced in Production Examples 1-20 were mixed with cotton in a mass ratio of 50:50 so as to produce slivers by MDTA (Micro Dust Trash Analyzer, produced by Uster Technologies "MDTA3"). Next, No. 20/1 count open-end yarns were produced by quick spin system ("Quick Spin System" manufactured by Uster Technologies) using these slivers. By using the open-end yarns, knit fabrics were produced by a one-feed knitting machine (16 gauge). The obtained knit fabrics were used as fabrics for flame retardance evaluation.

### <Method of evaluating flame retardance test>

The fabrics for flame retardance evaluation produced above were used in the flame retardance evaluation, and the burning test method was performed based on ISO 15025:2000 (Procedure A). The burning test method based on ISO 15025:2000 (Procedure A) is a method in which an evaluation fabric, which is set in a specific holder, is inflamed at right angle with flame of 25±2 mm for 10 seconds at a distance of 17 ± 1mm apart from the fabric. As the flame retardance evaluation criteria, in the burning test based on ISO 15025:2000 (Procedure A), if the evaluation fabric melts or the average afterflame time is 30 seconds or more, the fabric is determined to fail the test. If the evaluation fabric does not melt and the average afterflame time is less than 30 seconds, the fabric is determined to have flame retardance and pass the test.

Table 1 below summarizes the results of the flame retardance test evaluation using the fabrics containing the halogen-containing fibers of Examples 1-6, Comparative Examples 1-11 and Reference Examples 1-3. Table 1 below also indicates the average particle diameters of the metal compounds in the halogen-containing fibers of Examples 1-6, Comparative Examples 1-11 and Reference Examples 1-3 as well as the addition amounts of the metal compounds with respect to 100 parts by mass of the halogen-containing polymers. Incidentally, the halogen-containing polymers used in Production Examples 1-20 of halogen-containing fibers contain 35.1 parts by mass of halogen in 100 parts by mass of the polymers.

**[Table 1]**

| | Production Example | Metal compound | | | Flame retardance evaluation Value inside ( ) indicates afterflame time/sec |
|---|---|---|---|---|---|
| | | Kind | Average particle diameter (nm) | Addition amount (parts by mass) | |
| Example 1 | 1 | Molybdenum trioxide | 12 | 4 | Pass (0 sec) |
| Example 2 | 2 | Molybdenum trioxide | 100 | 4 | Pass (0 sec) |
| Example 3 | 3 | Molybdenum trioxide | 140 | 4 | Pass (0 sec) |
| Example 4 | 4 | Molybdenum trioxide | 540 | 4 | Pass (28 sec) |
| Example 5 | 5 | Ammonium molybdate | 160 | 4 | Pass (0 sec) |
| Example 6 | 6 | Molybdenum trioxide | 140 | 10 | Pass (0 sec) |
| Comparative Example 1 | 7 | Molybdenum trioxide | 1350 | 4 | Fail (48 sec) |
| Comparative Example 2 | 8 | Ammonium molybdate | 3450 | 4 | Fail (40 sec) |
| Comparative Example 3 | 9 | Zinc hydroxystannate | 150 | 4 | Fail (47 sec) |
| Comparative Example 4 | 10 | Zinc hydroxystannate | 250 | 4 | Fail (40 sec) |
| Comparative Example 5 | 11 | Zinc hydroxystannate | 1440 | 4 | Fail (37 sec) |
| Comparative Example 6 | 12 | Metastannic acid | 240 | 4 | Fail (45 sec) |
| Comparative Example 7 | 13 | Stannic oxide | 6 | 4 | Fail (37 sec) |
| Comparative Example 8 | 14 | Stannic oxide | 150 | 4 | Fail (46 sec) |
| Comparative Example 9 | 15 | Iron oxide | 6 | 4 | Fail (41 sec) |
| Comparative Example 10 | 16 | Iron oxide | 310 | 4 | Fail (52 sec) |
| Comparative Example 11 | 17 | Bismuth oxide | 150 | 4 | Fail (38 sec) |
| Reference Example 1 | 18 | Antimony trioxide | 800 | 2 | Pass (27 sec) |
| Reference Example 2 | 19 | Antimony trioxide | 800 | 4 | Pass (0 sec) |
| Reference Example 3 | 20 | Antimony pentoxide | 80 | 4 | Pass (0 sec) |

As can be seen from the results of Table 1 above, regarding the halogen-containing fibers of Examples 1-6, in the flame retardance test evaluation using fabrics containing the respective halogen-containing fibers, the fabrics did not melt and the afterflame times were less than 30 seconds, resulting in a pass. Especially, in the flame retardance test evaluation using fabrics containing the respective halogen-containing fibers, the halogen-containing flame-retardant fibers of Examples 1-3, 5 and 6 respectively containing the molybdenum compound having an average particle diameter of less than 300 nm had an afterflame time of 0 second, exhibiting extremely high flame-retardant properties.

On the other hand, regarding the halogen-containing fibers of Comparative Examples 1 and 2, since the molybdenum compounds had an average particle diameter of 600 nm or more, the afterflame times (sec) were 30 seconds or more in the flame retardance test evaluation using fabrics containing the respective halogen-containing fibers, resulting in a fail.

Incidentally, as can be seen from the results of Reference Examples 1-3, in the halogen-containing fibers containing the antimony compounds, the fabrics exhibited equivalent flame retardance regardless of the size of the average particle diameter when the content of the antimony compound is the same. In the case of the antimony compounds, the effect of enhancing flame retardance was not observed even when the average particle diameter was set to be less than 600 nm.

As is apparent from the comparison with the halogen-containing fibers of Reference Examples 2-3 using the antimony compounds, when the addition amount of the metal compound is the same, the halogen-containing flame-retardant fibers of Examples 1-3, 5 and 6 respectively containing the molybdenum compound having an average particle diameter of less than 300 nm have flame retardance equivalent to that of the halogen-containing flame-retardant fibers containing the antimony compounds.

Regarding the halogen-containing fibers of Comparative Examples 3-11 respectively containing one of zinc hyclioxystannate, metastannic acid, stannic oxide, iron oxide and bismuth oxide, which are commonly known as substances that enhance flame-retardant properties of halogen-containing polymers other than the molybdenum compounds, in the flame retardance test evaluation of fabrics containing the respective halogen-containing fibers, the afterflame times (sec) were 30 seconds or more, resulting in a fail. As can be seen from these results, when the metal compounds other than the molybdenum compounds were used, the effect of enhancing flame retardance was not observed even if the average particle diameter was set to be less than 600 nm. Especially as can be seen from the results of Comparative Examples 3-5, when zinc hydroxystannate was blended into the halogen-containing polymer, the flame retardance increases as the average particle diameter of zinc hydroxystannate increases, which is a tendency opposite to that of the molybdenum compounds in which the flame retardance increases as the average particle diameter decreases.

## Claims

1. A halogen-containing flame-retardant fiber comprising:
100 parts by mass of a halogen-containing polymer that contains 17 to 70 parts by mass of a halogen in 100 parts by mass of the polymer; and
1.3 to 20 parts by mass of a molybdenum compound,
wherein the molybdenum compound is at least one kind of compound selected from the group consisting of molybdenum oxide, ammonium molybdate, molybdenum oxide supported on an inorganic filler and ammonium molybdate supported on an inorganic filler,
wherein an average particle diameter of the molybdenum compound as expressed in median diameter is 10 nm or more and less than 600 nm, and
wherein the halogen-containing polymer is a polymer obtained by polymerizing 100 parts by mass of a monomer composition in total that contains
30 to 70 parts by mass of acrylonitrile,
30 to 70 parts by mass of a halogen-containing vinylidene monomer and/or
a halogen-containing vinyl monomer, and
0 to 10 parts by mass of a vinyl monomer copolymerizable therewith.

2. The halogen-containing flame-retardant fiber according to claim 1, wherein the halogen-containing polymer is a polymer obtained by polymerizing 100 parts by mass of a monomer composition in total that contains 30 to 70 parts by mass of acrylonitrile, 30 to 70 parts by mass of a halogen-containing vinylidene monomer, and 0 to 10 parts by mass of a vinyl monomer copolymerizable therewith.

3. The halogen-containing flame-retardant fiber according to claim 1 or 2, wherein the average particle diameter of the molybdenum compound as expressed in median diameter is 10 nm or more and less than 300 nm.

4. The halogen-containing flame-retardant fiber according to any one of claims 1 to 3, wherein the average particle diameter of the molybdenum compound as expressed in median diameter is 10 nm or more and less than 100 nm.

5. The halogen-containing flame-retardant fiber according to claim 1, wherein the inorganic filler contains talc and/or calcium carbonate.

6. The halogen-containing flame-retardant fiber according to any one of claims 1 to 5, wherein in a burning test method based on ISO 15025:2000 (Procedure A), an evaluation fabric does not melt and has an average afterflame time of less than 30 seconds.

7. A method for producing the halogen-containing flame-retardant fiber according to any one of claims 1 to 6, comprising spinning a composition that contains
100 parts by mass of a halogen-containing polymer that contains 17 to 70 parts by mass of a halogen in 100 parts by mass of the polymer, and
1.3 to 20 parts by mass of a molybdenum compound,
wherein the molybdenum compound is at least one kind of compound selected from the group consisting of molybdenum oxide, ammonium molybdate, molybdenum oxide supported on an inorganic filler and ammonium molybdate supported on an inorganic filler,
wherein in the composition for the spinning, an average particle diameter of the molybdenum compound as expressed in median diameter is 10 nm or more and less than 600 nm, and
wherein the halogen-containing polymer is a polymer obtained by polymerizing 100 parts by mass of a monomer composition in total that contains
30 to 70 parts by mass of acrylonitrile,
30 to 70 parts by mass of a halogen-containing vinylidene monomer and/or
a halogen-containing vinyl monomer, and
0 to 10 parts by mass of a vinyl monomer copolymerizable therewith.

8. A flame-retardant fiber product comprising the halogen-containing flame-retardant fiber according to any one of claims 1 to 6.

9. The flame-retardant fiber product according to claim 8, wherein the flame-retardant fiber product contains 10% by mass or more of the halogen-containing flame-retardant fiber, and 90% by mass or less of at least one kind of other fiber selected from the group consisting of a natural fiber, a regenerated fiber, a semisynthetic fiber, and a synthetic fiber other than the halogen-containing flame-retardant fiber.

10. The flame-retardant fiber product according to claim 9, wherein the flame-retardant fiber product contains 30 to 70% by mass of the other fiber.

11. The flame-retardant fiber product according to claim 9 or 10, wherein the other fiber contains a cellulosic fiber.

12. The flame-retardant fiber product according to claim 11, wherein the cellulosic fiber is at least one kind of fiber selected from the group consisting of a cotton fiber, a linen fiber, a rayon fiber, a polynosic fiber, a cupra fiber, and a cellulose acetate fiber.

## Patentansprüche

1. Eine halogenhaltige flammhemmende Faser, umfassend:
100 Massenteile eines halogenhaltigen Polymers, das 17 bis 70 Massenteile eines Halogens in 100 Massenteilen des Polymers enthält; und
1,3 bis 20 Massenteile einer Molybdänverbindung,
wobei die Molybdänverbindung mindestens eine Art von Verbindung ist, ausgewählt aus der Gruppe bestehend aus Molybdänoxid, Ammoniummolybdat, auf einem anorganischen Füllstoff geträgertem Molybdänoxid und auf einem anorganischen Füllstoff geträgertem Ammoniummolybdat,
wobei ein durchschnittlicher Teilchendurchmesser der Molybdänverbindung, ausgedrückt als Mediandurchmesser, 10 nm oder mehr und weniger als 600 nm beträgt, und
wobei das halogenhaltige Polymer ein Polymer ist, das durch Polymerisieren von insgesamt 100 Massenteilen einer Monomerzusammensetzung erhalten ist, die enthält
30 bis 70 Massenteile Acrylnitril,
30 bis 70 Massenteile eines halogenhaltigen Vinylidenmonomers und/oder eines halogenhaltigen Vinylmonomers, und
0 bis 10 Massenteile eines Vinylmonomers, das damit copolymerisierbar ist.

2. Die halogenhaltige flammhemmende Faser gemäß Anspruch 1, wobei das halogenhaltige Polymer ein Polymer ist, das durch Polymerisieren von insgesamt 100 Massenteilen einer Monomerzusammensetzung, die 30 bis 70 Massenteile Acrylnitril, 30 bis 70 Massenteile eines halogenhaltigen Vinylidenmonomers und 0 bis 10 Massenteile eines Vinylmonomers, das damit copolymerisierbar ist, enthält, erhalten ist.

3. Die halogenhaltige flammhemmende Faser gemäß Anspruch 1 oder 2, wobei der durchschnittliche Teilchendurchmesser der Molybdänverbindung, ausgedrückt als Mediandurchmesser, 10 nm oder mehr und weniger als 300 nm beträgt.

4. Die halogenhaltige flammhemmende Faser gemäß einem der Ansprüche 1 bis 3, wobei der durchschnittliche Teilchendurchmesser der Molybdänverbindung, ausgedrückt als Mediandurchmesser, 10 nm oder mehr und weniger als 100 nm beträgt.

5. Die halogenhaltige flammhemmende Faser gemäß Anspruch 1, wobei der anorganische Füllstoff Talkum und/oder Calciumcarbonat enthält.

6. Die halogenhaltige flammhemmende Faser gemäß einem der Ansprüche 1 bis 5, wobei in einem Brenntestverfahren basierend auf ISO 15025:2000 (Prozedur A) ein Bewertungsgewebe nicht schmilzt und eine durchschnittliche Nachbrennzeit von weniger als 30 Sekunden aufweist.

7. Ein Verfahren zur Herstellung der halogenhaltigen flammhemmenden Faser gemäß einem der Ansprüche 1 bis 6, umfassend Spinnen einer Zusammensetzung, die enthält 100 Massenteile eines halogenhaltigen Polymers, das 17 bis 70 Massenteile eines Halogens in 100 Massenteilen des Polymers enthält, und
1,3 bis 20 Massenteile einer Molybdänverbindung,
wobei die Molybdänverbindung mindestens eine Art von Verbindung ist, ausgewählt aus der Gruppe bestehend aus Molybdänoxid, Ammoniummolybdat, auf einem anorganischen Füllstoff geträgertem Molybdänoxid und auf einem anorganischen Füllstoff geträgertem Ammoniummolybdat,
wobei in der Zusammensetzung für das Spinnen, ein durchschnittlicher Teilchendurchmesser der Molybdänverbindung, ausgedrückt als Mediandurchmesser, 10 nm oder mehr und weniger als 600 nm beträgt, und
wobei das halogenhaltige Polymer ein Polymer ist, das durch Polymerisieren von insgesamt 100 Massenteilen einer Monomerzusammensetzung erhalten ist, die enthält
30 bis 70 Massenteile Acrylnitril,
30 bis 70 Massenteile eines halogenhaltigen Vinylidenmonomers und/oder eines halogenhaltigen Vinylmonomers, und
0 bis 10 Massenteile eines Vinylmonomers, das damit copolymerisierbar ist.

8. Ein flammhemmendes Faserprodukt, umfassend die halogenhaltige flammhemmende Faser gemäß einem der Ansprüche 1 bis 6.

9. Das flammhemmende Faserprodukt gemäß Anspruch 8, wobei das flammhemmende Faserprodukt 10 Massen-% oder mehr der halogenhaltigen flammhemmenden Faser, und 90 Massen-% oder weniger mindestens einer Art einer anderen Faser, ausgewählt aus der Gruppe bestehend aus einer Naturfaser, einer regenerierten Faser, einer teilsynthetischen Faser und einer synthetischen Faser, die von der halogenhaltigen flammhemmenden Faser verschieden ist, enthält.

10. Das flammhemmende Faserprodukt gemäß Anspruch 9, wobei das flammhemmende Faserprodukt 30 bis 70 Massen-% der anderen Faser enthält.

11. Das flammhemmende Faserprodukt gemäß Anspruch 9 oder 10, wobei die andere Faser eine Zellulosefaser enthält.

12. Das flammhemmende Faserprodukt gemäß Anspruch 11, wobei die Zellulosefaser mindestens eine Art von Faser ist, ausgewählt aus der Gruppe bestehend aus einer Baumwollfaser, einer Leinenfaser, einer Rayonfaser, einer Polynosic-Faser, einer Cupra-Faser und einer Zelluloseacetat-Faser.

## Revendications

1. Fibre ignifugeante contenant un halogène comprenant :
100 parties en poids d'un polymère halogéné qui contient de 17 à 70 parties en poids d'halogène pour 100 parties en poids de polymère ; et
de 1,3 à 20 parties en poids d'un composé de molybdène,
dans laquelle le composé de molybdène est au moins un type de composé choisi dans le groupe constitué par l'oxyde de molybdène, le molybdate d'ammonium, l'oxyde de molybdène supporté sur une charge inorganique et le molybdate d'ammonium supporté sur une charge inorganique,
dans laquelle un diamètre de particule moyen du composé de molybdène, exprimé en diamètre médian, est de 10 nm ou plus et inférieur à 600 nm, et
dans laquelle le polymère halogéné est un polymère obtenu par polymérisation de 100 parties en poids au total d'une composition de monomères qui contient
de 30 à 70 parties en poids d'acrylonitrile,
de 30 à 70 parties en poids d'un monomère de vinylidène halogéné et/ou d'un monomère de vinyle halogéné, et
de 0 à 10 parties en poids d'un monomère de vinyle copolymérisable avec celui-ci.

2. Fibre ignifugeante contenant un halogène selon la revendication 1, dans laquelle le polymère halogéné est un polymère obtenu par polymérisation de 100 parties en poids au total d'une composition de monomères qui contient de 30 à 70 parties en poids d'acrylonitrile, de 30 à 70 parties en poids d'un monomère de vinylidène halogéné, et de 0 à 10 parties en poids d'un monomère de vinyle copolymérisable avec celui-ci.

3. Fibre ignifugeante contenant un halogène selon la revendication 1 ou 2, dans laquelle le diamètre de particule moyen du composé de molybdène, exprimé en diamètre médian, est de 10 nm ou plus et inférieur à 300 nm.

4. Fibre ignifugeante contenant un halogène selon l'une quelconque des revendications 1 à 3, dans laquelle le diamètre de particule moyen du composé de molybdène, exprimé en diamètre médian, est de 10 nm ou plus et inférieur à 100 nm.

5. Fibre ignifugeante contenant un halogène selon la revendication 1, dans laquelle la charge inorganique contient du talc et/ou du carbonate de calcium.

6. Fibre ignifugeante contenant un halogène selon l'une quelconque des revendications 1 à 5, dans laquelle dans une méthode d'essai de combustion basée sur la norme ISO 15025:2000 (Procédure A), une étoffe soumise à évaluation ne fond pas et a une durée de combustion résiduelle moyenne inférieure à 30 secondes.

7. Méthode de production de la fibre ignifugeante contenant un halogène selon l'une quelconque des revendications 1 à 6, comprenant le filage d'une composition qui contient
100 parties en poids d'un polymère halogéné qui contient de 17 à 70 parties en poids d'halogène pour 100 parties en poids de polymère ; et
de 1,3 à 20 parties en poids d'un composé de molybdène,
dans laquelle le composé de molybdène est au moins un type de composé choisi dans le groupe constitué par l'oxyde de molybdène, le molybdate d'ammonium, l'oxyde de molybdène supporté sur une charge inorganique et le molybdate d'ammonium supporté sur une charge inorganique,
dans laquelle, dans la composition destinée à être filée, un diamètre de particule moyen du composé de molybdène, exprimé en diamètre médian, est de 10 nm ou plus et inférieur à 600 nm, et
dans laquelle le polymère halogéné est un polymère obtenu par polymérisation de 100 parties en poids au total d'une composition de monomères qui contient
de 30 à 70 parties en poids d'acrylonitrile,
de 30 à 70 parties en poids d'un monomère de vinylidène halogéné et/ou d'un monomère de vinyle halogéné, et
de 0 à 10 parties en poids d'un monomère de vinyle copolymérisable avec celui-ci.

8. Produit de fibre ignifugeante contenant la fibre ignifugeante contenant un halogène selon l'une quelconque des revendications 1 à 6.

9. Produit de fibre ignifugeante selon la revendication 8, dans lequel le produit de fibre ignifugeante contient 10 % en poids ou plus de fibre ignifugeante contenant un halogène, et 90 % en poids ou moins d'au moins un type d'autre fibre choisi dans le groupe constitué par une fibre naturelle, une fibre régénérée, une fibre semi-synthétique, et une fibre synthétique autre que la fibre ignifugeante contenant un halogène.

10. Produit de fibre ignifugeante selon la revendication 9, dans lequel le produit de fibre ignifugeante contient de 30 à 70 % en poids de l'autre fibre.

11. Produit de fibre ignifugeante selon la revendication 9 ou 10, dans lequel l'autre fibre contient une fibre cellulosique.

12. Produit de fibre ignifugeante selon la revendication 11, dans lequel la fibre cellulosique est un moins un type de fibre choisi dans le groupe constitué par une fibre de coton, une fibre de lin, une fibre de rayonne, une fibre polynosique, une fibre de cupra, et une fibre d'acétocellulose.
